# EUROPEAN PATENT APPLICATION

(11) **EP 3 106 868 A1**
(43) Date of publication of application: **21.12.2016**
(21) Application number: 15172175.0
(22) Date of filing: 15.06.2015
(51) Int. Cl.: G01N 29/02, G01N 29/24, G01N 29/30, G01N 29/32

(54) **ACOUSTIC WAVE BASED SENSORS**

(71) Applicant: Honeywell International Inc., Morris Plains, NJ 07950 (US)
(72) Inventor: Serban, Bogdan, Morristown, NJ 07962-2245 (US); Cobianu, Cornel, Morristown, NJ 07962-2245 (US); Brezeanu, Mihai, Morristown, NJ 07962-2245 (US); Stratulat, Alisa, Morristown, NJ 07962-2245 (US); Buiu, Octavian, Morristown, NJ 07962-2245 (US)
(74) Representative: Houghton, Mark Phillip

(57) **Abstract**

The present disclosure describes an acoustic wave based apparatus (100, 220, 340, 460) which includes a number of piezoelectric substrates (101, 201, 301, 401), a plurality of acoustic wave devices (102, 222, 341, 402) each formed on a surface of at least one of the number of piezoelectric substrates, and a first layer (104-1, 225-1, 345-1) including a reversibly oxygen-binding compound formed on the surface of one of the number of piezoelectric substrates in association with at least a first acoustic wave device (102-1, 222-1, 341-1, 402-1). The apparatus includes circuitry (108, 109, 111, 208, 209, 211,311) configured to determine a level of ambient oxygen gas (O₂) based upon a differential in output frequencies (107-1, 107-2, 228-1, 228-2, 347-1, 347-2) between the first acoustic wave device (102-1, 222-1, 341-1, 402-1) and a second acoustic wave device (102-2, 222-2, 341-2, 402-2) caused by binding of the ambient O₂ to the reversibly oxygen-binding compound.

## Description

### Technical Field

The present disclosure relates to apparatuses and methods for acoustic wave based sensors.

### Background

A level of ambient oxygen gas can be measured, in some instances, as a concentration (e.g., a percentage) of oxygen gas relative to other ambient gases in the atmosphere or other environments. Determination of the level of ambient oxygen gas may be useful in various applications. For instance, such a determination may be useful in applications related to internal combustion engines, medicine (e.g., for anesthesia monitors, etc.), and environmental, home, and/or workplace monitoring, among other applications.

### Brief Description of the Drawings

Figure 1 illustrates a schematic top view of a number of acoustic wave based sensors in accordance with one or more embodiments of the present disclosure.
Figure 2 illustrates another schematic top view of a number of acoustic wave based sensors in accordance with one or more embodiments of the present disclosure.
Figure 3 illustrates schematic top views and cross-section side views of a number of acoustic wave based sensors in accordance with one or more embodiments of the present disclosure.
Figure 4 illustrates a perspective view and a cross-section side view of an implementation of a number of acoustic wave based sensors in accordance with one or more embodiments of the present disclosure.
Figure 5 is a block diagram that illustrates depositing components of a number of acoustic wave based sensors on a piezoelectric substrate in accordance with one or more embodiments of the present disclosure.

### Detailed Description

The present disclosure describes apparatuses and methods for a number of acoustic wave based sensors that, in various embodiments, include an oxygen sensor to determine the level of ambient oxygen gas (O₂). A layer that includes a reversibly oxygen-binding compound can be associated with the acoustic wave based oxygen sensor. For example, as described herein, the reversibly oxygen-binding compound can be transchlorocarbonylbis(triphenylphosphine)iridium(I), otherwise known as Vaska's complex, which has the formula IrCl(CO)[P(C₆H₅)₃]₂ without bound O₂.

Differential ambient oxygen gas (O₂) sensing configurations are described herein in which acoustic wave signal frequencies output by an acoustic wave device that includes the layer with the reversibly oxygen-binding compound can, in various embodiments as described herein, be compared to acoustic wave signal frequencies output by an acoustic wave device that does or does not include the reversibly oxygen-binding compound. Various configurations also are described in which ambient temperature can be selectively determined.

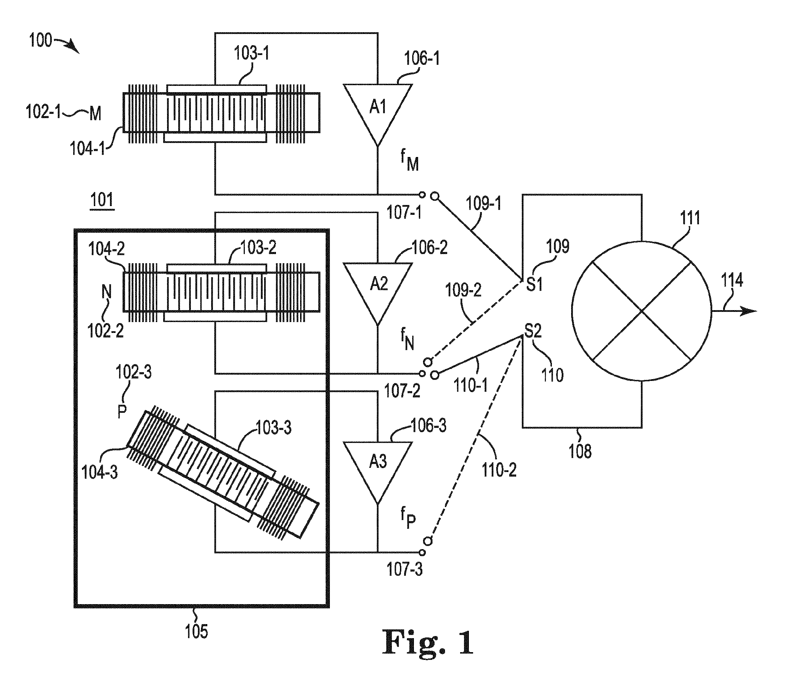

Accordingly, as illustrated in connection with Figures 1, 2, 3, and 4, the present disclosure describes apparatuses and methods for a number of acoustic wave based sensors. Acoustic wave based apparatuses 100, 220, 340, 460 can include a number of piezoelectric substrates 101, 201, 301, 401, a plurality of acoustic wave devices 102, 222, 341, 402 each formed on a surface of at least one of the number of piezoelectric substrates, and a first layer 104-1, 225-1, 345-1 including a reversibly oxygen-binding compound formed on the surface of one of the number of piezoelectric substrates in association with at least a first acoustic wave device 102-1, 222-1, 341-1, 402-1.

The apparatuses can include circuitry 108, 109, 111, 208, 209, 211, 311 configured to determine a level of ambient O₂ based upon a differential in output frequencies 107-1, 107-2, 228-1, 228-2, 347-1, 347-2 between the first acoustic wave device 102-1, 222-1, 341-1, 402-1 and a second acoustic wave device 102-2, 222-2, 341-2, 402-2 caused by binding of the ambient O₂ to the reversibly oxygen-binding compound.

In the following detailed description, reference is made to the accompanying figures that form a part hereof. The figures show by way of illustration how one or more embodiments of the disclosure may be practiced.

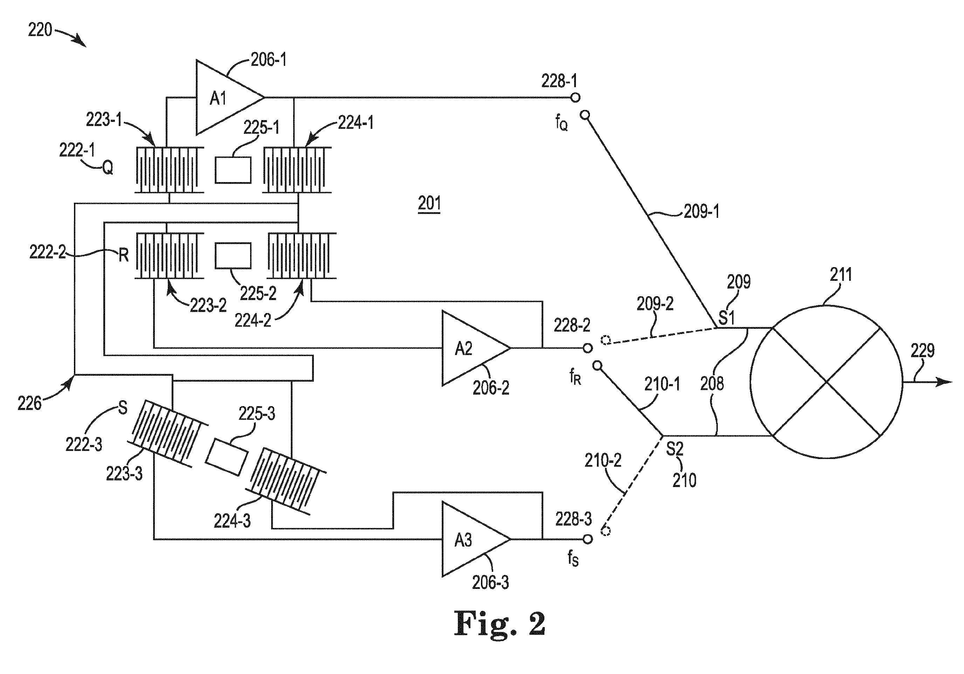

The figures herein follow a numbering convention in which the first digit or digits correspond to the drawing figure number and the remaining digits identify an element or component in the drawing. Similar elements or components between different figures may be identified by the use of similar digits. For example, 109 may reference element "09" in Figure 1, and a similar element may be referenced as 209 in Figure 2.

Figure 1 illustrates a schematic top view of a number of acoustic wave based sensors in accordance with one or more embodiments of the present disclosure. Figure 1 illustrates that the number of acoustic wave based sensors 100 can, in some embodiments, include three SAW resonance devices M 102-1, N 102-2, and P 102-3 formed on a surface of a piezoelectric substrate 101. The piezoelectric substrate 101 generally represents any suitable structure on which other components of the acoustic wave based sensors 100 can be formed or carried. The piezoelectric substrate 101 could, for example, represent ST-cut quartz (SiO₂), lithium tantalate (LiTaO₃), and lithium niobate (LiNbO₃), or other suitable piezoelectric materials.

Each of the SAW resonance devices includes one IDT 103-1, 103-2, 103-3. Each of the IDTs can include two sets of conductive fingers, where one set of conductive fingers is interleaved with the other set of conductive fingers. Each SAW resonance device M 102-1, 102-2, 102-3 can be fabricated (e.g., formed) using any suitable material(s), for example, metals such as aluminum (Al), gold (Au), and chromium (Cr), and combinations and/or alloys thereof (e.g., Cr/Au) , among other metals. Each SAW resonance device M 102-1, 102-2, 102-3 also can be formed in any suitable manner, such as by etching the highly-doped polysilicon and/or metal using a mask.

SAW resonance device M 102-1 can be fabricated (e.g., formed) with a first layer 104-1 including a reversibly oxygen-binding compound formed on the surface of the underlying piezoelectric substrate 101 and formed over at least part of the IDT 103-1. The first layer 104-1, and corresponding reference layers 104-2 and/or 104-3 formed, in various embodiments, with or without the reversibly oxygen-binding compound, can be designed with particular areas and/or thicknesses suitable for particular implementations. In some embodiments, the reversibly oxygen-binding compound in at least the first layer 104-1 can be Vaska's complex (IrCl(CO)[P(C₆H₅)₃]₂), which can bind O₂ at around room temperature, among other temperatures, by oxidative addition to provide an oxygen adduct. The interaction is reversible such that IrCl(CO)[P(C₆H₅)₃]₂ + O₂ ↔ IrCl(CO)[P(C₆H₅)₃]₂O₂. The O₂ molecule can bond both of its oxygen atoms to Ir in a so-called side-on bonding. The oxygen adduct can revert to the parent compound upon heating the oxygen adduct and/or purging the oxygen adduct with an inert gas (e.g., nitrogen (N₂)).

In order to facilitate use in a layer associated with a SAW device, the Vaska's complex can be immobilized in the layers (e.g., the first layer 104-1) in a polymeric matrix. As such, the first layer 104-1, and corresponding reference layers 104-2 and/or 104-3, can each include a compound selected to form a polymeric matrix to immobilize the reversibly oxygen-binding compound, to be permeable to ambient O₂, and/or to be chemically nonreactive with the reversibly oxygen-binding compound, regardless of whether the reversibly oxygen-binding compound is actually present in the layer. For example, the polymeric matrix can be formed from a number of compounds selected from a group that can include: various forms of organically modified silicas or silicates (ORMOSILs); polystyrene; PS-co-fluoroacrylate; polyvinylfluoride (Teflon AF); poly(dimethylsiloxane); ethyl-cellulose; and/or silicon rubber; among other polymeric matrix-forming compounds having the characteristics after implementation of immobilizing the reversibly oxygen-binding compound, being permeable to ambient O₂, and/or being chemically nonreactive with the reversibly oxygen-binding compound. In various embodiments, the reversibly oxygen-binding compound can be mixed in a range of from around 30% to around 60% by weight with the number of polymeric matrix compounds.

The resonant frequencies of the SAW resonance devices M 102-1, 102-2, 102-3, for which the energy absorbed by the piezoelectric substrate 101 has a high value, can depend on the properties of the content of an associated layer (e.g., the reversibly oxygen-binding compound and/or the polymeric matrix compound in layer 104). When the SAW resonance device is exposed to O₂, the layer 104 configured to sense the O₂ changes its properties, which can affect the resonant frequency of the SAW resonance device. The change in the resonant frequency, monitored by an external circuit, can be directly related (e.g., proportional) to a variation in a concentration of the O₂.

As such, SAW resonance device M 102-1 with layer 104-1 including a reversibly oxygen-binding compound formed over at least part of the IDT 103-1 can be utilized for selective detection of O₂ at around room temperature, among other temperatures. SAW resonance devices can use IDT 103-1, 103-2, 103-3 to generate and/or detect an acoustic wave that travels from one end of the device to the other. When O₂ is bound to the reversibly oxygen-binding compound in the layer 104-1, a change can occur in acoustic wave propagation velocity and/or frequency, along with a change in visco-elastic properties of the layer, the magnitude of the change being dependent upon how much the mass of the layer 104-1 increases due to bound O₂. How much the mass of the layer 104-1 increases due to the bound O₂ can depend upon the level of ambient O₂ in the vicinity of the layer 104-1.

To enable the differential ambient O₂ and/or temperature sensing operations described herein, in some embodiments, at least one SAW resonance device can be included on the surface of the piezoelectric substrate 101 as a reference sensor that is not associated with the reversibly oxygen-binding compound. In some embodiments, as shown in Figure 1, SAW resonance devices N 102-2 and/or P 102-3 can be formed on the surface of the piezoelectric substrate 101 as reference sensors.

As such, SAW resonance devices N 102-2 and/or P 102-3 each may have a layer 104-2, 104-3 that includes the polymeric matrix compound, but not including the reversibly oxygen-binding compound, formed over at least part of their respective IDTs 103-2 and 103-3. Inclusion of the polymeric matrix compound in the reference layers may reduce differences in baseline acoustic wave propagation velocities and/or frequencies between each of the SAW resonance devices M 102-1, N 102-2, and P 102-3.

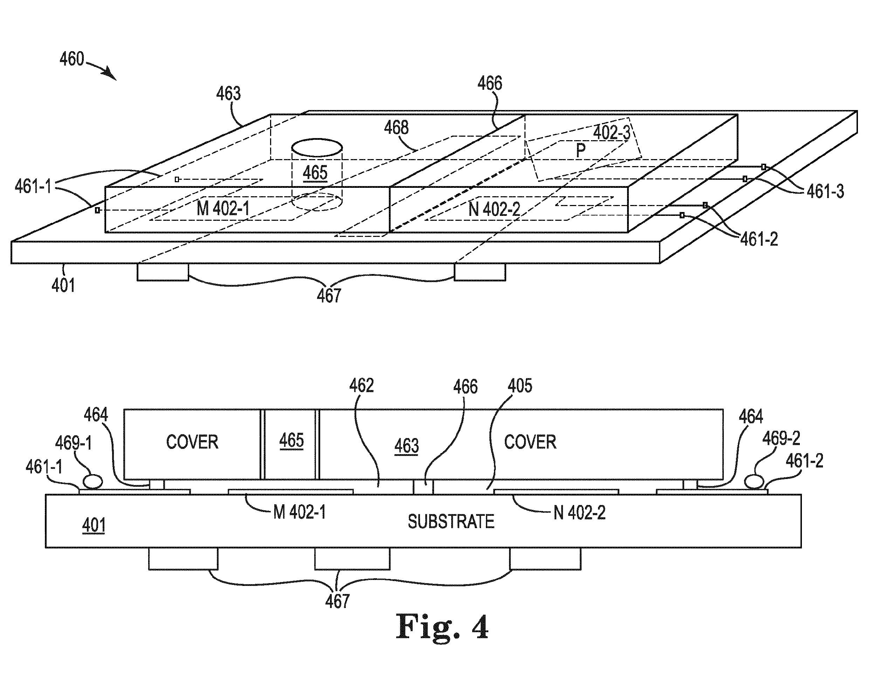

Alternatively or in addition, the SAW resonance devices N 102-2 and/or P 102-3 used as references can be formed in a compartment 105 on the surface of the piezoelectric substrate 101. The compartment 105, as described further in connection with Figure 4, can serve as a barrier to ambient O₂ penetrating the compartment (e.g., by being substantially airtight) and interacting with the SAW resonance devices N 102-2 and/or P 102-3 utilized as reference sensors. In some embodiments, the compartment 105 can be filled with an inert gas (e.g., N₂ at substantially atmospheric pressure or otherwise). By not being exposed to ambient O₂, the SAW resonance devices N 102-2 and/or P 102-3 can be formed with layers 104-2, 104-3 that include both the polymeric matrix compound and the reversibly oxygen-binding compound and serve as reference sensors.

As shown in Figure 1, SAW resonance device M 102-1 with layer 104-1 can be connected to an oscillator circuit 106-1 that includes an amplifier A1 in a positive feedback loop for oscillating at an output frequency f_{M} 107-1. The output frequency f_{M} 107-1 for SAW resonance device M 102-1 can be affected by an ambient O₂ level, which determines how much O₂ is bound to the reversibly oxygen-binding compound in the layer 104-1.

As such, there can be a range of output frequencies f_{M} that corresponds to a range of ambient O₂ levels. For example, the range of ambient O₂ levels can correspond to a lower level concentration of 0 percent (%) of O₂ and an upper level of 20-some % relative to other ambient gases in the atmosphere or an even higher percentage in some environments. The range can depend upon the amount of the reversibly oxygen-binding compound in the layer 104-1, which can affect how rapidly the reversibly oxygen-binding compound is saturated with bound O₂. In some embodiments, the range can be affected by the ambient temperature. For this reason, among others, the ambient temperature can selectively be measured, e.g., determined, by the acoustic wave based sensors 100, as described herein.

The acoustic wave based sensors 100 can, in some embodiments, further include an oscillator circuit 106-2 connected to the SAW resonance device N 102-2 usable as a reference sensor relative to the SAW resonance device M 102-1 with layer 104-1. The oscillator circuit 106-2 can include an amplifier A2 to provide a positive feedback loop for oscillating at an output frequency f_{N} 107-2. The output frequency f_{N} 107-2 can, in some embodiments, be considered a reference frequency relative to the output frequency f_{M} 107-1.

The amplifier A1 of oscillator circuit 106-1 and the amplifier A2 of oscillator circuit 106-2 can be utilized to generate electrical oscillations with frequencies f_{M} 107-1 and f_{N} 107-2, respectively, based on the acoustic signals generated by their respective IDTs 103-1, 103-2. The acoustic signals can then be converted back to electrical signals by the IDTs 103-1, 103-2 located in the positive feed-back loops of the two oscillator circuits 106-1, 106-2.

In some embodiments, as described herein, the SAW resonance devices N 102-2 and/or P 102-3 can be fabricated with layers 104-2, 104-3 including the polymeric matrix compound, but without the reversibly oxygen-binding compound, formed over at least part of IDTs 103-2 and/or 103-3. Such layers can serve as O₂ reference layers by not actively binding the ambient O₂, although such layers can be configured to have similar behavior relative to ambient temperature and/or humidity behavior of the SAW resonance device M 102-1 with layer 104-1. Such configurations can be utilized to obtain relative symmetry between, for example, oscillator circuit 106-1 and oscillator circuit 106-2 of the acoustic wave based sensors 100. Further symmetry can be provided by using with layers 104-2, 104-3 that include both the polymeric matrix compound and the reversibly oxygen-binding compound when they are not exposed to ambient O₂.

As described further herein, circuitry 108, 109, 111 can be configured to determine a level of ambient O₂ based upon a differential in the output frequencies f_{N} 107-2 and f_{M} 107-1 between the SAW resonance device M 102-1 with layer 104-1 and the SAW resonance device N 102-2 with layer 104-2 used as a reference sensor. As described herein, the differential in the output frequencies f_{N} 107-2 and f_{M} 107-1 can be caused by the binding of ambient O₂ to the reversibly oxygen-binding compound in the layer 104-1 associated with the SAW resonance device M 102-1.

In some embodiments, as described herein, the acoustic wave based sensors 100 can be fabricated (e.g., formed) to include a third SAW resonance device P 102-3 with associated layer 104-3 formed on the surface of the piezoelectric substrate 101 with a longitudinal axis at an angle of from around 10 degrees to around 20 degrees relative to a longitudinal axis of the SAW resonance device N 102-2. In contrast, the SAW resonance device N 102-2 can be formed with its longitudinal axis substantially parallel to a longitudinal axis of the SAW resonance device M 102-1 formed on the piezoelectric substrate 101 with associated layer 104-1.

As described further herein, circuitry 108, 110, 111 can be configured to determine an ambient temperature based upon a differential in output frequencies f_{N} 107-2 and f_{P} 107-3 between the SAW resonance device N 102-2 and/or the third SAW resonance device P 102-3. The differential in the output frequencies f_{N} 107-2 and f_{P} 107-3 can be caused by different temperature coefficients of acoustic wave velocities in the different crystallographic directions relative to the piezoelectric substrate (e.g., resonance devices N 102-2 and P 102-3 being offset at an angle of from around 10 degrees to around 20 degrees). That is, the output frequency f_{P} 107-3 of SAW resonance device P 102-3 can be relatively unaffected by variance in the ambient temperature. In contrast, the SAW resonance devices M 102-1 and N 102-2 can be formed with substantially the same temperature coefficients of acoustic wave velocities, which can at least partially result from having substantially parallel longitudinal axes.

As shown in Figure 1, SAW resonance device N 102-2 can be connected to an oscillator circuit 106-2 that includes an amplifier A2 in a positive feedback loop for oscillating at the output frequency f_{N} 107-2. The output frequency f_{N} 107-2 for SAW resonance device N 102-2 can be affected by an ambient temperature. As such, there can be a range of output frequencies f_{N} that corresponds to a range of ambient temperatures.

SAW resonance device P 102-3 can be connected to an oscillator circuit 106-3 that includes an amplifier A3 in a positive feedback loop for oscillating at the output frequency f_{P} 107-3. The output frequency f_{P} 107-3 for SAW resonance device P 102-3 can be relatively unaffected by variation in ambient temperature. As such, SAW resonance device P 102-3 can be usable as a reference sensor relative to the SAW resonance device N 102-2. The output frequency f_{P} 107-3 can, in some embodiments, be considered a reference frequency relative to the output frequency f_{N} 107-2.

The amplifier A2 of oscillator circuit 106-2 and the amplifier A3 of oscillator circuit 106-3 can be utilized to generate electrical oscillations with frequencies f_{N} 107-2 and f_{P} 107-3, respectively, based on the acoustic signals generated by their respective IDTs 103-2, 103-3. The acoustic signals can then be converted back to electrical signals by the IDTs 103-2, 103-3 located in the positive feed-back loops of the two oscillator circuits 106-2, 106-3.

In some embodiments, both SAW resonance device N 102-2 and SAW resonance device P 102-3 can be formed on the surface of the piezoelectric substrate 101 in a compartment 105, as described herein, designed to reduce exposure to the ambient O₂. As such, SAW resonance device N 102-2 can serve as a reference O₂ sensor relative to SAW resonance device M 102-1 serving as an O₂ sensor and SAW resonance device P 102-3 can serve as a reference temperature sensor relative to SAW resonance device N 102-2 serving as a temperature sensor. Hence, the ambient temperature can selectively be measured, e.g., determined, by the acoustic wave based sensors 100, as described herein.

The circuitry described herein can be interconnected by a switching device 108 (e.g., a double pole-double-throw (DPDT) switch, among other possible switch configurations) that is part of the circuitry. The switching device 108 can be positioned between output contacts for the output frequencies f_{M} 107-1, f_{N} 107-2, and f_{P} 107-3 of the oscillator circuits 106-1, 106-2, and 106-3 and a controller 111 (e.g., a mixer). For temperature-compensated O₂ level determination, a contact of switch element S1 109 can connect with 109-1 the output contact for the output frequency f_{M} 107-1 and a contact of switch element S2 110 can connect with 110-1 the output contact for the output frequency f_{N} 107-2. For temperature measurement, the contact of switch element S1 109 can connect with 109-2 the output contact for the output frequency f_{N} 107-2 and the contact of switch element S2 110 can connect with 110-2 the output contact for the output frequency f_{P} 107-3.

The controller 111 can be configured to perform frequency subtraction to determine a differential between the output frequencies f_{M} 107-1, f_{N} 107-2, and/or f_{P} 107-3. As such, depending on the contact positions of switch elements S1 109 and S2 110 just described, a determination of the ambient O₂ level or a determination of the ambient temperature can be selectively output 114 by the controller 111.

That is, the ambient O₂ level can be determined by being proportional to the differential Δf = f_{M} - f_{N} for switch element S1 109 connected so as to input output frequency f_{M} 107-1 and switch element S2 110 connected so as to input output frequency f_{N} 107-2 to the controller 111. The common mode signals for this switch configuration, such as temperature, humidity, and/or electronic noise, among others, can be removed by this differential approach. The ambient temperature can be determined by being proportional to the differential Δf = f_{N} - f_{P} for switch element S1 109 connected so as to input output frequency f_{N} 107-2 and switch element S2 110 connected so as to input output frequency f_{P} 107-3 to the controller 111. The common mode signals for this configuration, such as O₂ level, humidity, and/or electronic noise, among others, can be removed by this differential approach.

In some embodiments, the SAW resonance devices M 102-1, N 102-2, and P 102-3, the associated oscillator circuits 106-1, 106-2, and 106-3, along with the circuitry associated with the switching device 108 and the controller 111 can be located on a same chip. In various embodiments, the chip can include or be the same as the piezoelectric substrate 101.

Figure 2 illustrates another schematic top view of a number of acoustic wave based sensors in accordance with one or more embodiments of the present disclosure. Figure 2 illustrates that the number of acoustic wave based sensors 220 can, in some embodiments, include three SAW delay line devices Q 222-1, R 222-2, and S 222-3 fabricated (e.g., formed) on a surface of a piezoelectric substrate 201. The piezoelectric substrate 201 generally represents any suitable structure on which other components of the acoustic wave based sensors 220 can be formed or carried, as described in connection with Figure 1.

As shown in Figure 2, SAW delay line device Q 222-1 with a first layer 225-1 can be connected to an oscillator circuit 206-1 that includes an amplifier A1 with the SAW delay line device Q 222-1 in a positive feedback loop for oscillating at an output frequency f_{Q} 228-1. The output frequency f_{Q} 228-1 for SAW delay line device Q 222-1 can be affected by an ambient O₂ level, which determines how much O₂ is bound to a reversibly oxygen-binding compound in the first layer 225-1, as described in connection with Figure 1. In some embodiments, the reversibly oxygen-binding compound can be Vaska's complex. As such, there can be a range of output frequencies f_{Q} that corresponds to a range of ambient O₂ levels.

In order to facilitate use in a layer associated with a SAW delay line device, the reversibly oxygen-binding compound (e.g., Vaska's complex) can be immobilized in the first layer 225-1 in a polymeric matrix. As such, the layer 225-1 can include a compound selected to form a polymeric matrix to immobilize the reversibly oxygen-binding compound, to be permeable to ambient O₂, and/or to be chemically nonreactive with the reversibly oxygen-binding compound that is selected, for example, from the number of compounds in the group described in connection with Figure 1.

The SAW delay line device Q 222-1 can include the first layer 2251 with the reversibly oxygen-binding compound in between an input IDT 223-1 and an output IDT 224-1. In some embodiments, the layer 225-1 can be utilized to fill a gap between the input IDT 223-1 and the output IDT 224-1 of the oscillator circuit 206-1.

Each of the SAW delay line devices Q 222-1, R 222-2, S 222-3 can include one input IDT 223-1, 223-2, 223-3 and one output IDT 224-1, 224-2, 224-3, respectively. Each of the input and output IDTs can include two sets of conductive fingers, where one set of conductive fingers is interleaved with the other set of conductive fingers. Each SAW delay line device Q 222-1, R 222-2, S 222-3 can be fabricated (e.g., formed) using any suitable material(s), such as Al or Cr/Au metals, for example. Each SAW delay line device Q 222-1, R 222-2, S 222-3 also can be formed in any suitable manner, such as by etching the metal using a mask.

The acoustic wave based sensors 220 can further include an oscillator circuit 206-2 to serve as a reference sensor for the SAW delay line device Q 222-1 that includes the first layer 225-1. The oscillator circuit 206-2 can include SAW delay line device R 222-2 formed with a layer 225-2 that includes the polymeric matrix-forming compound and, in various embodiments as described in connection with Figure 1, with or without the reversibly oxygen-binding compound in between input IDT 223-2 and an output IDT 224-2. The oscillator circuit 206-2 can include an amplifier A2 with the SAW delay line device R 222-2 in a positive feedback loop for oscillating at an output frequency f_{R} 228-2. The output frequency f_{R} 228-2 for SAW delay line device R 222-2 can be relatively unaffected by a variation in an ambient O₂ level on the SAW delay line device R 222-2, as described herein. As such, the output frequency f_{R} 228-2 for SAW delay line device R 222-2 can, in some embodiments, be considered a reference frequency relative to the output frequency f_{Q} 228-1.

In some embodiments, SAW delay line devices R 222-2 and/or S 222-3 each can be formed with a layer 225-2, 225-3, respectively, between their respective input and output IDTs that includes the polymeric matrix-forming compounds described in connection with Figure 1. In some embodiments, each layer 225-2, 225-3 also can be formed with the reversibly oxygen-binding compound. Such layers may be used as reference layers relative to first layer 225-1 of SAW delay line device Q 222-1 formed with the polymeric matrix-forming compounds and the reversibly oxygen-binding compound. Such reference layers can be configured to have similar visco-elastic, temperature, and/or humidity behaviors as first layer 225-1, while being relatively insensitive to O₂ and/or by not being exposed to ambient O₂. Such configurations can be utilized to obtain symmetry between, for example, oscillator circuit 206-1 and oscillator circuit 206-2 of the acoustic wave based sensors 220.

In some embodiments, as described herein, the acoustic wave based sensors 220 can be fabricated (e.g., formed) to include a third SAW delay line device S 222-3 with layer 225-3 formed on the surface of the piezoelectric substrate 201 with a longitudinal axis at an angle of from around 10 degrees to around 20 degrees relative to a longitudinal axis of the SAW delay line device R 222-2. In contrast, the SAW delay line device R 222-2 can be formed with its longitudinal axis substantially parallel to a longitudinal axis of the SAW delay line device Q 222-1 formed on the piezoelectric substrate 201 with associated layer 225-1.

As described further herein, circuitry 208, 210, 211 can be configured to determine an ambient temperature based upon a differential in output frequencies f_{R} 228-2 and f_{S} 228-3 between the SAW delay line device R 222-2 and the third SAW delay line device S 222-3. The differential in the output frequencies f_{R} 228-2 and f_{S} 228-3 can be caused by different temperature coefficients of acoustic wave velocities in the different crystallographic directions relative to the piezoelectric substrate (e.g., delay line devices R 222-2 and S 222-3 being offset at an angle of from around 10 degrees to around 20 degrees). That is, the output frequency f_{S} 228-3 of SAW delay line device S 222-3 can be relatively unaffected by variance in the ambient temperature. In contrast, the SAW delay line devices Q 222-1 and R 222-2 can be formed with substantially the same temperature coefficients of acoustic wave velocities, which can at least partially result from having substantially parallel longitudinal axes.

As shown in Figure 2, SAW delay line device R 222-2 can be connected to an oscillator circuit 206-2 that includes an amplifier A2 in a positive feedback loop for oscillating at the output frequency f_{R} 228-2. The output frequency f_{R} 228-2 for SAW delay line device R 222-2 can be affected by an ambient temperature. As such, there can be a range of output frequencies f_{R} that corresponds to a range of ambient temperatures.

SAW resonance device S 222-3 can be connected to an oscillator circuit 206-3 that includes an amplifier A3 in a positive feedback loop for oscillating at the output frequency f_{S} 228-3. The output frequency f_{S} 228-3 for SAW delay line device S 222-3 can be relatively unaffected by variation in ambient temperature. As such, SAW delay line device S 102-3 can be usable as a reference sensor relative to the SAW delay line device R 222-2. The output frequency f_{S} 228-3 can, in some embodiments, be considered a reference frequency relative to the output frequency f_{R} 228-2.

The amplifier A2 of oscillator circuit 206-2 and the amplifier A3 of oscillator circuit 206-3 can be utilized to generate electrical oscillations with frequencies f_{R} 228-2 and f_{S} 228-3, respectively, based on the acoustic signals generated by their respective input IDTs 223-2, 223-3 combined with their respective output IDTs 224-2, 224-3. The acoustic signals can then be converted back to electrical signals by the IDTs located in the positive feed-back loops of the two oscillator circuits 206-2, 206-3.

In some embodiments, both SAW delay line device R 222-2 and SAW delay line device S 222-3 can be formed on the surface of the piezoelectric substrate 201 in a compartment (not shown) designed to reduce exposure to the ambient O₂, as described in connection with Figure 1. Alternatively or in addition, SAW delay line devices Q 222-1, R 222-2, and/or S 222-3 can be connected to a common ground plane 226.

As such, SAW delay line device R 222-2 can serve as a reference O₂ sensor relative to SAW delay line device Q 222-1 serving as an O₂ sensor and SAW delay line device S 222-3 can serve as a reference temperature sensor relative to SAW delay line device R 222-2 serving as a temperature sensor. Hence, the ambient temperature can selectively be measured, e.g., determined, by the acoustic wave based sensors 220, as described herein.

As described in connection with Figure 1, the circuitry described herein can be interconnected by a switching device 208 that is part of the circuitry positioned between output contacts for the output frequencies f_{Q} 228-1, f_{R} 228-2, and f_{S} 228-3 of the oscillator circuits 206-1, 206-2, and 206-3 and the circuitry can include a controller 211 (e.g., a mixer). For temperature-compensated O₂ level determination, a contact of switch element S1 209 can connect with 209-1 the output contact for the output frequency f_{Q} 228-1 and a contact of switch element S2 210 can connect with 210-1 the output contact for the output frequency f_{R} 228-2. For temperature measurement, the contact of switch element S1 209 can connect with 209-2 the output contact for the output frequency f_{R} 228-2 and the contact of switch element S2 210 can connect with 210-2 the output contact for the output frequency f_{S} 228-3.

As described in connection with Figure 1, the controller 211 can be configured to perform frequency subtraction to determine a differential between the output frequencies f_{Q} 228-1, f_{R} 228-2, and/or f_{S} 228-3 such that a determination of the ambient O₂ level or a determination of the ambient temperature can be selectively output 229 by the controller 211. That is, the ambient O₂ level can be determined by being proportional to the differential Δf = f_{Q} - f_{R} for switch element S1 209 connected so as to input output frequency f_{Q} 228-1 and switch element S2 210 connected so as to input output frequency f_{R} 228-2 to the controller 211. The common mode signals for this switch configuration, such as temperature, humidity, and/or electronic noise, among others, can be removed by this differential approach. The ambient temperature can be determined by being proportional to the differential Δf = f_{R} - f_{S} for switch element S1 209 connected so as to input output frequency f_{R} 228-2 and switch element S2 210 connected so as to input output frequency f_{S} 228-3 to the controller 211. The common mode signals for this configuration, such as O₂ level, humidity, and/or electronic noise, among others, can be removed by this differential approach.

In some embodiments, the SAW delay line devices Q 222-1, R 222-2, and S 222-3, the associated oscillator circuits 206-1, 206-2, and 206-3, along with the circuitry associated with the switching device 208 and the controller 211 can be located on a same chip. In various embodiments, the chip can include or be the same as the piezoelectric substrate 201.

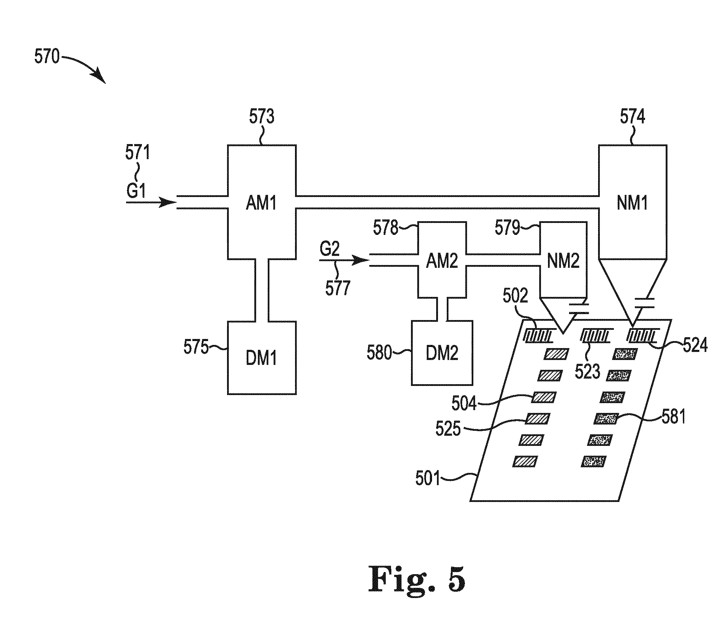

In some embodiments, the layers of the acoustic wave based sensors 100, 220 described in connection with Figures 1 and 2 can be deposited in a selective and mask-less manner utilizing a direct printing system, as described in connection with Figure 5. That is, the IDTs, the layers with the polymeric matrix-forming compounds and the reversibly oxygen-binding compound, and/or the reference layers with the polymeric matrix-forming compounds can be formed on the same piezoelectric substrate (e.g., chip) as an example of an on-chip SAW sensor array. However, in some embodiments, the circuitry including the amplifiers, switching devises, and/or controllers, etc., can be formed on a separate chip (e.g., an application specific integrated circuit (ASIC)).

The direct printed substrate (e.g., chip) and the ASIC can, in some embodiments, be packaged three dimensionally (3D) in a stack in order to form a 3D integrated sensing system. Alternatively, the IDTs, the layers with the polymeric matrix-forming compounds and the reversibly oxygen-binding compound, and/or the reference layers with the polymeric matrix-forming compounds can be formed on the same chip, while the circuitry including the amplifiers, switching devises, and/or controllers, etc., can be formed on a separate ASIC chip, although positioned together on a surface of the same substrate in order to form a two dimensional (2D) system.

Accordingly, as described in connection with Figures 1 and 2, an acoustic wave based sensor apparatus can include a piezoelectric substrate, a plurality of SAW devices formed on a surface of the piezoelectric substrate, where each of the SAW devices comprises at least one IDT, and a first layer including a reversibly oxygen-binding compound formed on the surface of the piezoelectric substrate in association with at least a first SAW device. The apparatus can further include circuitry configured to determine a level of ambient O₂ based upon a differential in output frequencies between the first SAW device and a second SAW device caused by binding of the ambient O₂ to the reversibly oxygen-binding compound in the layer associated with the first SAW device.

As described herein, the reversibly oxygen-binding compound can, in some embodiments, be IrCl(CO)[P(C₆H₅)₃]₂ (Vaska's complex) included in the layer substantially without bound O₂. The first layer (e.g., 104-1, 225-1) can include a compound selected to form a polymeric matrix to immobilize the reversibly oxygen-binding compound, to be permeable to the ambient O₂, and/or to be chemically nonreactive with the reversibly oxygen-binding compound. A second layer (e.g., 104-2, 104-3, 225-2, 225-3) that includes the polymeric matrix-forming compound can be formed on the surface of the piezoelectric substrate in association with at least the second SAW device (e.g., 102-2, 102-3, 222-2, 222-3). In various embodiments, the second layer can be formed with the reversibly oxygen-binding compound or without the reversibly oxygen-binding compound.

The polymeric matrix can be formed from a number of compounds selected from a group that includes: various forms of organically modified silicas or silicates (ORMOSILs); polystyrene; PS-co-fluoroacrylate; polyvinylfluoride (Teflon AF); poly(dimethylsiloxane); ethyl-cellulose; and/or silicon rubber. The reversibly oxygen-binding compound can be mixed in a range of from around 30% to around 60% by weight with the number of polymeric matrix compounds.

In some embodiments, as described in connection with Figure 1, the plurality of SAW devices can each be SAW resonator devices including a single IDT and the layer including the reversibly oxygen-binding compound can be formed on the surface of the piezoelectric substrate over at least a first SAW resonator device. In some embodiments, as described in connection with Figure 2, the plurality of SAW devices can each be SAW delay line devices including an input IDT and an output IDT and the layer including the reversibly oxygen-binding compound can be formed on the surface of the piezoelectric substrate between the input IDT and the output IDT of at least a first SAW delay line device.

A third SAW device can, in various embodiments, be formed on the surface of the piezoelectric substrate with a longitudinal axis at an angle of from around 10 degrees to around 20 degrees relative to a longitudinal axis of the second SAW device. At least the second SAW device can, in some embodiments, be formed on the surface of the piezoelectric substrate in a compartment designed to reduce exposure to the ambient O₂ in order to serve as a reference O₂ sensor relative to the first SAW device serving as an O₂ sensor. The second SAW device and the third SAW device can, in some embodiments, be formed on the surface of the piezoelectric substrate in the compartment designed to reduce exposure to the ambient O₂. As such, at least the second SAW device can be formed in association with a second layer that includes the reversibly oxygen-binding compound. Accordingly, the second SAW device can serve as a reference O₂ sensor relative to the first SAW device serving as an O₂ sensor and one of the second or third SAW devices can serve as a reference temperature sensor relative to the other one of the second or third SAW devices serving as a temperature sensor.

As further described in connection with Figures 1 and 2, an acoustic wave based sensor apparatus can include circuitry configured to determine an ambient temperature based upon a differential in frequencies between the second SAW device and the third SAW device. The differential in the frequencies can be caused by different temperature coefficients of acoustic wave velocities based on the second SAW device and the third SAW device being in different crystallographic directions relative to the piezoelectric substrate.

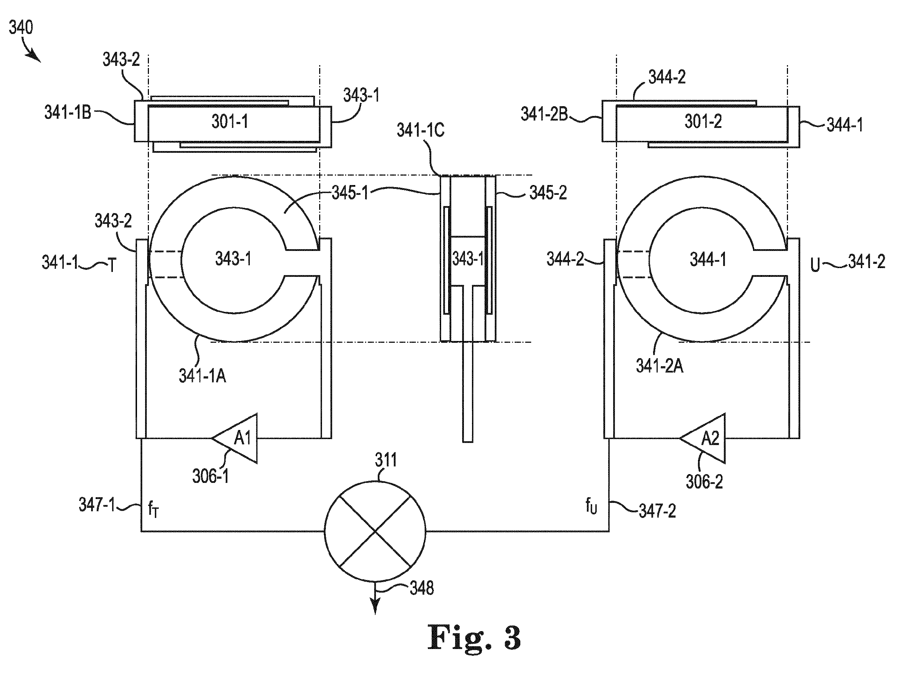

Figure 3 illustrates schematic top views and cross-section side views of a number of acoustic wave based sensors in accordance with one or more embodiments of the present disclosure. Figure 3 illustrates that the number of acoustic wave based sensors 340 can, in some embodiments, include two bulk acoustic wave (BAW) devices T 341-1 and U 341-3 each fabricated (e.g., formed) at least in part on a surface of a piezoelectric substrate 301. That is, BAW device T 341-1 can be at least partially formed on the surface of piezoelectric substrate 301-1 and BAW device U 341-2 can be at least partially formed on the surface of piezoelectric substrate 301-2. The piezoelectric substrate 301 generally represents any suitable structure on which other components of the acoustic wave based sensors 340 can be formed or carried, as described in connection with Figure 1. In some embodiments, the piezoelectric substrates 301-1, 301-2 can be matched in composition, size, shape, and/or behavioral properties to achieve symmetry between the BAW devices T 341-1 and U 341-3.

As shown in Figure 3 in a top view 341-1A of the BAW device T 341-1, a first metal electrode 343-1 can be fabricated (e.g., formed) on a top surface of the piezoelectric substrate 301-1. A second metal electrode 343-2 can be formed on a bottom surface of the piezoelectric substrate 301-1. The positions of the first metal electrode 343-1 and the second metal electrode 343-2 relative to the piezoelectric substrate 301-1 are shown in cross-section side view 341-1 B in which the piezoelectric substrate 301-1 is rolled such that the first metal electrode 343-1 is under the piezoelectric substrate 301-1. Further clarification of the positions of the first metal electrode 343-1 and the second metal electrode 343-2 is provided in cross-section side view 341-1C in which the piezoelectric substrate 301-1 is turned such that the outside edge of the first metal electrode 343-1 is in front and the region of the first metal electrode 343-1 on the top surface of the piezoelectric substrate 301-1 is shown on the left side of the piezoelectric substrate 301-1.

The BAW device T 341-1 can be fabricated (e.g., formed) with a reversibly oxygen-binding compound, as described herein, in a first layer 345-1 over a portion of the first metal electrode 343-1. The BAW device T 341-1 also can be formed with a reversibly oxygen-binding compound in a second layer 345-2 over a portion of the second metal electrode 343-2. In various embodiments, the areas of the first layer 345-1 and the second layer 345-2 can correspond to all or part of the area of the top and/or bottom surfaces of the piezoelectric substrate 301-1, as shown in the top view 341-1 A and the cross-section side views 341-1 B, 341-1C.

In order to facilitate use in the layers associated with a BAW device, the reversibly oxygen-binding compound (e.g., Vaska's complex) can be immobilized in the layers 345-1, 345-2 in a polymeric matrix. As such, the layers 345-1, 345-2 can include a compound selected to form a polymeric matrix to immobilize the reversibly oxygen-binding compound, to be permeable to ambient O₂, and/or to be chemically nonreactive with the reversibly oxygen-binding compound that is selected, for example, from the number of compounds in the group described in connection with Figure 1.

As shown in Figure 3, BAW device T 341-1 with layers 345-1, 345-2 can be connected to an oscillator circuit 306-1 that includes an amplifier A1 with the BAW device T 341-1 in a positive feedback loop for oscillating at an output frequency f_{T} 347-1. The output frequency f_{T} 347-1 for BAW device T 341-1 can be affected by an ambient O₂ level, which determines how much O₂ is bound to a reversibly oxygen-binding compound in the layers 345-1, 345-2, as described in connection with Figure 1. As such, there can be a range of output frequencies f_{T} that corresponds to a range of ambient O₂ levels.

The acoustic wave based sensors 340 shown in Figure 3 can, in some embodiments, include a BAW device U 341-2 configured as a reference O₂ sensor relative to the BAW device T 341-1 with layers 345-1, 345-2. That is, the BAW device U 341-2 can be formed without the reversibly oxygen-binding compound formed over portions of a first metal electrode 341-1 and a second metal electrode 344-2. In some embodiments, layers (not shown) including the polymeric matrix compounds described herein can be formed over portions of the first metal electrode 341-1 and the second metal electrode 344-2 for symmetry.

The acoustic wave based sensors 340 can further include an oscillator circuit 306-2 to serve as the reference O₂ sensor for the BAW device T 341-1 that includes the layers 345-1, 345-2. The oscillator circuit 306-2 can include BAW device U 341-2 formed without the reversibly oxygen-binding compound. The oscillator circuit 306-2 can include an amplifier A2 with the BAW device U 341-2 in a positive feedback loop for oscillating at an output frequency f_{U} 347-2. The output frequency f_{U} 347-2 for BAW device U 341-2 can be relatively unaffected by a variation in an ambient O₂ level on the BAW device U 347-2 without the reversibly oxygen-binding compound. As such, the output frequency f_{U} 347-2 for BAW device U 341-2 can, in some embodiments, be considered a reference frequency relative to the output frequency f_{T} 347-1.

The amplifier A1 of oscillator circuit 306-1 and the amplifier A2 of oscillator circuit 306-2 can be utilized to generate electrical oscillations with frequencies f_{T} 347-1 and f_{U} 347-2, respectively, based on the acoustic signals generated by their respective electrodes. The acoustic signals can then be converted back to electrical signals by the positive feed-back loops of the two oscillator circuits 306-1, 306-2.

The circuitry described in connection with Figure 3 can include a controller 311 (e.g., a mixer) to which outputs can be connected for the output frequencies f_{T} 347-1 and f_{U} 347-2 of the oscillator circuits 306-1 and 306-2. As described in connection with Figure 1, the controller 311 can be configured to perform frequency subtraction to determine a differential between the output frequencies f_{T} 347-1 and f_{U} 347-2 such that a determination of the ambient O₂ level can be output 348 by the controller 311. That is, the ambient O₂ level can be determined by being proportional to the differential Δf = f_{T} - f_{U}. The common mode signals for this configuration, such as temperature, humidity, and/or electronic noise, among others, can be removed by this differential approach.

In some embodiments, a direct printing process (e.g., as described in connection with Figure 5) can be utilized for selective application of various liquid solutions of the O₂ sensing layers 345-1, 345-2 on the surface of the piezoelectric substrate 301-1 and/or the O₂ reference layers (not shown) on the surface of the piezoelectric substrate 301-2. The metal electrodes 343-1, 343-2, 344-1, 344-2 can be affixed to the top and/or bottom surfaces of the piezoelectric substrates 301-1, 301-2. The oscillator circuits 306-1, 306-2 can be connected to the metal electrodes in order to provide electrical connections for the piezoelectric substrates.

Accordingly, as described in connection with Figure 3, an acoustic wave based sensor apparatus can include a pair of piezoelectric substrates (e.g., a matched pair, as described herein) and a first electrode 343-1 formed on a surface and a second electrode 343-2 formed on an opposite surface of each of the pair of piezoelectric substrates to form a first BAW device T 341-1 and a second BAW device U 341-2. A first layer 345-1 including a reversibly oxygen-binding compound can be formed at least over a portion of the first electrode 343-1 and a portion of the surface of the piezoelectric substrate 301-1 of the first BAW device 341-1. The acoustic wave based sensor apparatus can include circuitry configured to determine a level of ambient O₂ based upon a differential in output frequencies between the first BAW device and the second BAW device caused by binding of ambient O₂ to the reversibly oxygen-binding compound. In some embodiments, a second layer 345-2 including the reversibly oxygen-binding compound can be formed at least over a portion of the second electrode 343-2 and a portion of the opposite surface of the piezoelectric substrate 301-1 of the first BAW device T 341-1.

As described herein in connection with Figures 1 and 2, the reversibly oxygen-binding compound can, in some embodiments, be IrCl(CO)[P(C₆H₅)₃]₂ (Vaska's complex) included in the first layer 345-1 and/or the second layer 345-2 substantially without and/or unsaturated with bound O₂. The first layer 345-1 and/or the second layer 345-2 can include a compound selected to form a polymeric matrix to immobilize the reversibly oxygen-binding compound, to be permeable to the ambient O₂, and/or to be chemically nonreactive with the reversibly oxygen-binding compound. In some embodiments, a layer (not shown) including the matrix-forming compound can be formed at least over a portion of the first electrode and a portion of the surface of the piezoelectric substrate of the second BAW device, where such a layer can be formed without the reversibly oxygen-binding compound. The polymeric matrix can be formed from the number of compounds selected from the group of compounds described in connection with Figures 1 and 2. The reversibly oxygen-binding compound can be mixed in a range of from around 30% to around 60% by weight with the number of polymeric matrix compounds.

The resonant frequencies of the BAW devices T 341-1 and U 341-2, for which the energy absorbed by the piezoelectric substrates 301-1 and 301-2 has a high value, can depend on the properties of the content of an associated layer (e.g., the reversibly oxygen-binding compound and/or the polymeric matrix compound in layers 345-1 and/or 345-2). When the BAW device T 341-1 is exposed to O₂, the layers 345-1 and/or 345-2 configured to sense the O₂ change in properties, which can affect the resonant frequency of the BAW device. The change in the resonant frequency, monitored by an external circuit, can be directly related (e.g., proportional) to a variation in a concentration of the O₂.

Figure 4 illustrates a perspective view and a cross-section side view of an implementation of a number of acoustic wave based sensors in accordance with one or more embodiments of the present disclosure. The configuration of the implementation 460 of the number of acoustic wave based sensors is shown by way of example and not by way of limitation. That is, the scope of the various embodiments covered by the present disclosure encompasses any other configurations in which the structures and/or methods described herein may be utilized.

An example of an embodiment for fabricating (e.g., forming) the number of acoustic wave based sensors can be performed as follows. A piezoelectric substrate 401 (e.g., an ST-cut quartz wafer) can be used. For differential measurement of O₂ and temperature, three SAW devices M 402-1, N 402-2, and P 402-3 can be formed on the surface of the piezoelectric substrate wafer 401.

The interdigitated comb metal structures (e.g., fingers) of IDTs 103, 223, 224 of the SAW devices (e.g., of the SAW resonators 102 shown in Figure 1 and/or the SAW delay lines 222 shown in Figure 2) and/or reflectors for the SAW devices can be fabricated using metal deposition and/or etching techniques (e.g., using Al or Cr/Au sputtering followed by photolithography and/or etching processes). The metal layers for the IDT structures can, in some embodiments, be fabricated with thicknesses (e.g., above the piezoelectric substrate 401) of 100 nanometers or less.

In various embodiments, the three SAW devices can be three SAW resonance devices or three SAW delay line devices each formed in association with a layer that includes the matrix-forming compound described herein. In some embodiments, as described herein, only SAW device M 402-1 is formed to be associated with a layer that includes a reversibly oxygen-binding compound, as described herein in connection with Figures 1 and 2. That is, in some embodiments, SAW devices N 402-2 and P 402-3 each can be formed with reference layers that include a number of the polymeric matrix-forming compounds described herein, but without the reversibly oxygen-binding compound. A cover 463 (e.g., an ST-cut quartz wafer) with an access vent 465 (e.g., to enable transit of ambient 02) can, in various embodiments, be bonded by polymer technology, as described herein, to the piezoelectric substrate wafer 401.

The longitudinal axes of SAW devices M 402-1 and N 402-2 can, as described herein, be formed substantially parallel to each other, whereas the longitudinal axis of SAW device P 402-3 can be tilted (e.g., off-set) at an angle of from around 10 degrees to around 20 degrees relative (e.g., at an angle of 18 degrees) with respect to SAW devices M 402-1 and N 402-2. The SAW devices SAW devices M 402-1 and N 402-2 will have substantially the same temperature coefficient of frequency, while SAW device P 402-3 will have a different temperature coefficient of frequency, due to the anisotropy of, for example, the quartz crystallographic directions. Hence, SAW device P 402-3 with a smaller temperature coefficient of frequency can serve as a reference for temperature measurement.

A heating component 467 (e.g., a resistive heater fabricated from platinum or any other suitable material) can be formed on a back side of the piezoelectric substrate wafer 401 (e.g., on the opposite side of the piezoelectric substrate wafer 401 from the cover wafer 463). In some embodiments, the heating component 467 and an associated meandering resistive pathway 468 can be formed. For example, the associated meandering resistive pathway 468 can be formed by depositing a patterned photoresist compound on the back side of the piezoelectric substrate wafer 401, depositing a platinum layer on the back side of the piezoelectric substrate wafer 401, and removing (e.g., by lift-off technology) the photoresist compound to leave a meandering platinum resistive pathway 468 of a platinum heating component 467.

Conductive lines 461-1, 461-2, and 461-3 (e.g., fabricated from Au, silver (Ag), Cr, Cr/Au, etc., or any other suitable conductive material) for input of electrical power and/or signals can be formed for the three SAW devices M 402-1, N 402-2, and P 402-3. The conductive lines 461-1, 461-2, and 461-3 can, in various embodiments, be fabricated to be thicker and/or wider than (e.g., 100 nanometers or more) the fingers of IDTs 103, 223, 224 of the SAW devices 102, 222, 402. For clarity, conductive lines 461-1 and 461-2 in the cross-section side view are not connected to SAW devices M 402-1 and N 402-2, respectively, although in an actual implementation the conductive lines would be connected to provide the electrical power and/or signals to the SAW devices.

In some embodiments, the conductive lines 461-1, 461-2, 461-3 can be deposited by sputtering on a front side of the piezoelectric substrate wafer 401 by lift-off technology, as described above. The conductive lines can, in some embodiments, be formed with a width in a range of from around 0.1 millimeters to around 1.0 millimeter and a thickness in a range of from around 100 nanometers to around 1.0 micrometer for either SAW resonance devices or SAW delay line devices. The conductive lines may be fabricated with such dimensions so as to reduce a possibility of a large series resistance value. In some embodiments, a conductive bump attachment 469-1, 469-2 (e.g., fabricated from Au, silver (Ag), Cr, Cr/Au, etc., or any other suitable conductive material) can be similarly formed near an end of the conductive lines 461-1, 461-2, and/or 461-3 distal from the SAW devices M 402-1, N 402-2, P 402-3.

The SAW devices M 402-1, N 402-2, P 402-3 can, in various embodiments (e.g., as described in connection with Figure 5), be directly printed on the piezoelectric substrate wafer 401. That is, in addition to other components of the SAW devices, the IDTs and the associated sensing layers with the reversibly oxygen-binding compound (e.g., an O₂ sensor) and/or the layers without the reversibly oxygen-binding compound (e.g., a reference O₂ sensor) can be directly printed. Such direct printing can include thermal annealing of the deposited layers at around 60-70 degrees Celsius.

A bonding polymer 464 (e.g., SU8, among others) can be deposited around a perimeter of the piezoelectric substrate wafer 401 (e.g., around each chip of an ST-cut quartz substrate wafer) to seal the cover wafer 463 to the substrate wafer 401. For clarity, Figure 4 shows only one bonded chip, although this can be repeated many times on the same substrate wafer, as described herein. The bonding polymer 464 can, in some embodiments, be deposited by direct printing at a thickness in a range of from around 3 micrometers to around 5 micrometers. A separating wall 466 can, in some embodiments, be formed on the surface of the piezoelectric substrate wafer 401 from the bonding polymer material. The separating wall 466 can separate the SAW device M 402-1 serving as the O₂ sensor in a first compartment 462 from a second compartment 405 including the SAW devices N 402-2 and P 402-3 serving as the reference O₂ sensor, the temperature sensor, and/or the reference temperature sensor.

Prior to placing the cover wafer 463 on top of the piezoelectric substrate wafer 401 and the components formed on the surface thereof, alignment marks (e.g., etches) can, in some embodiments, be performed on a cover wafer intended to form a plurality of cover wafers to, for example, allow defining a same chip size on both wafers (e.g., for the cover wafer 463 and the piezoelectric substrate wafer 401). Access vents 465 (e.g., vias) can be formed (e.g., drilled, etched, among other suitable techniques) at appropriate positions on the cover wafer. The appropriate positions for the access vents 465 in the cover wafer 463 can correspond to the positions of the O₂ sensors formed on the piezoelectric substrate wafer 401.

In some embodiments, the cover wafer can be positioned over the piezoelectric substrate wafer. As such, in some embodiments, the bonding polymer 464 around the perimeter of each chip and/or used to form each separating wall 466 on the piezoelectric substrate wafer can be thermally annealed simultaneously to the cover wafer with the alignment marks. In some embodiments, the thermal annealing can be performed at a temperature below around 80 degrees Celsius so as not to potentially affect the performance of the O₂ sensor and/or the reference O₂ sensor. Individual acoustic wave based sensor apparatuses can be formed by die separation (e.g., by a singulation method). In some embodiments, individual cover wafers 463 can be separated (e.g., by die separation) from the cover wafer before being positioned over the piezoelectric substrate wafer and/or the piezoelectric substrate wafer can be separated into individual piezoelectric substrate chips 401 on which the individual cover wafers 463 can be positioned.

Accordingly, as described in connection with Figure 4, a method of fabricating an acoustic wave based sensor apparatus can include providing a piezoelectric substrate wafer 401 and depositing (e.g., by direct printing) in association with a first acoustic wave device M 402-1 formed thereon a layer including IrCl(CO)[P(C₆H₅)₃]₂ (e.g., unsaturated with bound O₂ as a reversibly oxygen-binding compound) to form an O₂ sensor relative to a second acoustic wave device N 402-2 formed thereon as a reference O₂ sensor. The method can include interconnecting circuitry with the piezoelectric substrate wafer, the O₂ sensor, and/or the reference O₂ sensor and configuring the circuitry to determine a level of ambient O₂ based upon a differential in output frequencies between the O₂ sensor and the reference O₂ sensor, as described in connection with Figures 1 and 2. The differential can be caused by binding of ambient O₂ to the layer including the IrCl(CO)[P(C₆H₅)₃]₂].

In some embodiments, where the layers (e.g., 104-2, 104-3, 225-2, 225-3) of the reference sensors (e.g., 102-2, 102-3, 22-2, 222-3) are formed without the reversibly oxygen-binding compound, the method can include forming a spacer material (e.g., using bonding polymer 464) on the surface of the piezoelectric substrate wafer around a periphery of the O₂ sensor and the reference O₂ sensor. The method also can include forming a cover wafer over the piezoelectric substrate wafer with an access vent positioned to enable the ambient O₂ to access the O₂ sensor and the reference O₂ sensor. For example, the reference O₂ sensor can be formed without associated IrCl(CO)[P(C₆H₅)₃]₂.

By comparison, in some embodiments, where the layers (e.g., 104-2, 104-3, 225-2, 225-3) of the reference sensors (e.g., 102-2, 102-3, 22-2, 222-3) are formed with the reversibly oxygen-binding compound, the method can include forming a separating wall 466 (e.g., using bonding polymer 464) on a surface of the piezoelectric substrate wafer to separate the O₂ sensor and the reference O₂ sensor, forming a spacer material (e.g., using bonding polymer 464) on the surface of the piezoelectric substrate wafer around a periphery of the O₂ sensor and the reference O₂ sensor, and forming a cover wafer 463 over the piezoelectric substrate wafer with an access vent 465 positioned to enable the ambient O₂ to access the O₂ sensor.

As such, a first compartment 462 can be formed for enclosing the O₂ sensor and a second compartment 405 can be formed for enclosing the reference O₂ sensor by a combination of the separating wall, the spacer material, and the cover wafer. The separating wall, the spacer material, and the cover wafer can be used as a barrier to the ambient O₂ accessing the second compartment and the reference O₂ sensor therein. In some embodiments, where the reference O₂ sensor N 402-2, which is also the temperature sensor, and the reference temperature sensor P 403-3 are associated with a layer including the reversibly oxygen-binding compound, the second compartment can be filled with an inert gas (e.g., N₂).

In some embodiments, the method can include forming the second acoustic wave device N 402-2 with a longitudinal axis substantially parallel to a longitudinal axis of the first acoustic wave device M 402-1 formed on the piezoelectric substrate wafer and forming on the piezoelectric substrate wafer a third acoustic wave device P 402-3 (e.g., without the associated IrCl(CO)[P(C₆H₅)₃]₂]) as a reference temperature sensor with a longitudinal axis at an angle of from around 10 degrees to around 20 degrees relative to the longitudinal axis of the second acoustic wave device. As such, the second acoustic wave device N 402-2 can be configured as a temperature sensor relative to the reference temperature sensor P 402-3. The method can include interconnecting circuitry with the piezoelectric substrate wafer, the temperature sensor, and/or the reference temperature sensor and configuring the circuitry to determine an ambient temperature based upon a differential in output frequencies between the temperature sensor and the reference temperature sensor (e.g., caused by different temperature coefficients of acoustic wave velocities), as described in connection with Figures 1 and 2.

In some embodiments, the method can include interconnecting the circuitry with a switching device (e.g., a double pole-double throw switch) such that outputs of the O₂ sensor, the reference O₂ sensor, the temperature sensor, and/or the reference temperature sensor are selectively connected to a controller (e.g., a mixer), as described in connection with Figures 1 and 2. The controller can be configured to determine the level of ambient O₂ based upon the differential in the output frequencies between the O₂ sensor and the reference O₂ sensor and determine the ambient temperature based upon the differential in the output frequencies between the temperature sensor and the reference temperature sensor. In some embodiments, the reference O₂ sensor and the temperature sensor can be the second acoustic wave device N 402-2.

In some embodiments, the method can include forming the acoustic wave based sensor apparatus to operate in an ambient temperature range (e.g., in a range of from around -20 to around +50 degrees Celsius) as an acoustic wave based O₂ sensor apparatus. A heating component 467 can be connected to the piezoelectric substrate wafer in association with at least the first acoustic wave device M 402-1 formed thereon to enable heating (e.g., in a range of from around 60 to around 80 degrees Celsius) of at least the first acoustic wave device M 402-1 to reverse oxygen-binding to (e.g., dissociate O₂ bound to) the IrCl(CO)[P(C₆H₅)₃]₂. In some embodiments, the heating to reverse the oxygen-binding can be performed after determining the level of ambient O₂ in the ambient temperature range. In some embodiments, the reversal of the oxygen-binding can be performed by exposure of the first acoustic wave device M 402-1 to an inert gas (e.g., N₂).

Figure 5 is a block diagram that illustrates depositing components of a number of acoustic wave based sensors on a piezoelectric substrate in accordance with one or more embodiments of the present disclosure. Figure 5 shows a block diagram of an example embodiment of a direct printing system 570 that can be utilized for depositing functional layers 504, 525, and/or 581 of the SAW devices described herein on a wafer 501 (e.g., a piezoelectric substrate). The direct printing system 570 can be utilized to place a number of layers 504 and 525 over at least a portion of IDTs 502 that contributes to forming SAW resonance devices. The layers 504 can include the reversibly oxygen-binding compound (e.g., IrCl(CO)[P(C₆H₅)₃]₂) to form an O₂ sensor and the layers 525 can be formed without the reversibly oxygen-binding compound (e.g., although possibly with the polymeric matrix compound that is also in layer 504) to contribute to forming a reference O₂ sensor. Similarly, the direct printing system 570 can be utilized to place a number of layers 581 in between IDTs 523 and 524 of a SAW delay line device, as described in connection with Figure 2. In various embodiments, the oscillator circuits described herein, including the amplifiers, can be mask-less deposited on the wafer 501.

As shown in Figure 5, the direct printing system 570 constitutes by way of example a dual-head direct printing system where each type of liquid solution can utilize its own distribution system for local, selective, and/or additive deposition with respect to the liquid phase of the particular material. A homogeneous liquid phase of each solution can be prepared by chemical synthesis. The wafer 501 can be cleaned before liquid phase deposition.

An input gas G1 571 (e.g., N₂, among others) can be passed through a first atomizer module (AM1) 573. The input gas G1 571 further flows through a first deposition material (DM1) module 575 to generate an atomized liquid solution. The atomized liquid solution with the reversibly oxygen-binding compound can be utilized to generate multiple O₂ sensor layers 504, 581 on the wafer 501 through a first nozzle module (NM1) 574 by additive deposition in the appropriate position on the wafer 501.

Another input gas G2 577 (e.g., N₂, among others) can be passed through a second atomizer module (AM2) 578 to be processed through a second deposition module (DM2) 580 to generate an atomized liquid solution. The atomized liquid solution can be utilized to generate multiple reference O₂ sensor layers 525 on the wafer 501 through a second nozzle module (NM2) 579 by additive deposition in the appropriate position on the wafer 501.

Thereafter, a transition from liquid to gel phase of the functional layers 504, 525, and/or 581 can be carried out at the end of deposition of the liquid phase on the surface. The gel layers can be dried for solvent removal from the gel layer. The gel layers can be thermally consolidated (e.g., annealed) in order to obtain a functionalized thin solid layer.

The embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure. It is also to be understood that the terminology used herein is for the purpose of describing particular embodiments only, and is not intended to be limiting.

As will be appreciated, elements shown in the various embodiments herein can be added, exchanged, combined, and/or eliminated so as to provide a number of additional embodiments of the present disclosure. The proportion and/or the relative scale of the elements provided in the figures are intended to illustrate the embodiments of the present disclosure, and should not be taken in a limiting sense.

As used herein, the singular forms "a", "an", and "the" include singular and plural referents, unless the context clearly dictates otherwise, as do "a number of", "at least one", and "one or more". For example, "a number of ion locations" can refer to one or more ion locations. Furthermore, the words "can" and "may" are used throughout this application in a permissive sense (i.e., having the potential to, being able to), not in a mandatory sense (i.e., must).

The term "include", and derivations thereof, mean "including, but not limited to." The term "integrated", and derivations thereof, mean two or more physical entities directly connected to each other or mutually connected via another physical entity.

Although specific embodiments have been illustrated and described herein, those of ordinary skill in the art will appreciate that an arrangement calculated to achieve the same techniques can be substituted for the specific embodiments shown. This disclosure is intended to cover any and all adaptations and/or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. In the foregoing Detailed Description, various features are grouped together in example embodiments illustrated in the figures for the purpose of streamlining the disclosure.

This method of disclosure is not to be interpreted as reflecting an intention that the embodiments of the disclosure require more features than are expressly recited in each claim. Rather, inventive subject matter lies in less than all features of a single disclosed embodiment. Therefore, the scope of various embodiments of the disclosure should be determined with reference to the appended claims, along with the full range of equivalents to which such claims are entitled.

## Claims

1. An acoustic wave based sensor apparatus (100, 220, 340, 460), comprising:
a number of piezoelectric substrates (101, 201, 301, 401);
a plurality of acoustic wave devices (102, 222, 341, 402) each formed on a surface of at least one of the number of piezoelectric substrates;
a first layer (104-1, 225-1, 345-1) comprising a reversibly oxygen-binding compound formed on the surface of one of the number of piezoelectric substrates in association with at least a first acoustic wave device (102-1, 222-1, 341-1, 402-1); and
circuitry (108, 109, 111, 208, 209, 211, 311) configured to determine a level of ambient oxygen gas (O₂) based upon a differential in output frequencies (107-1, 107-2, 228-1, 228-2, 347-1, 347-2) between the first acoustic wave device (102-1, 222-1, 341-1, 402-1) and a second acoustic wave device (102-2, 222-2, 341-2, 402-2) caused by binding of the ambient O₂ to the reversibly oxygen-binding compound.

2. The apparatus of claim 1, wherein the reversibly oxygen-binding compound is IrCl(CO)[P(C₆H₅)₃]₂ substantially without bound O₂.

3. The apparatus of claim 1, wherein:
the first layer (104-1, 225-1, 345-1) comprises a compound selected to form a polymeric matrix to immobilize the reversibly oxygen-binding compound, to be permeable to the ambient O₂, and to be chemically nonreactive with the reversibly oxygen-binding compound;
wherein a second layer (104-2, 225-2, 345-2) that comprises the polymeric matrix-forming compound is formed on the surface of the at least one of the number of piezoelectric substrates (101, 201, 301, 401) in association with at least the second acoustic wave device (102-2, 222-2, 341-2, 402-2); and
wherein the second layer is formed:
with the reversibly oxygen-binding compound; or
without the reversibly oxygen-binding compound.

4. The apparatus of claim 1, wherein the polymeric matrix is formed from a number of compounds selected from a group that includes:
various forms of organically modified silicas or silicates (ORMOSILs);
polystyrene;
PS-co-fluoroacrylate;
polyvinylfluoride (Teflon AF);
poly(dimethylsiloxane);
ethyl-cellulose; and
silicon rubber; and
wherein the reversibly oxygen-binding compound is mixed in a range of from around 30% to around 60% by weight with the number of polymeric matrix compounds.

5. The apparatus of claim 1, wherein:
the number of piezoelectric substrates is a single piezoelectric substrate (101);
the plurality of acoustic wave devices are each surface acoustic wave (SAW) resonator devices (102-1, 102-2, 102-3) comprising a single interdigital transducer (IDT) 103-1, 103-2, 103-3); and
the first layer (104-1) comprising the reversibly oxygen-binding compound is formed on the surface of the single piezoelectric substrate over at least a first SAW resonator device (102-1).

6. The apparatus of claim 1, wherein:
the number of piezoelectric substrates is a single piezoelectric substrate (201);
the plurality of acoustic wave devices are each surface acoustic wave (SAW) delay line devices (222-1, 222-2, 222-3) comprising an input interdigital transducer (IDT) (223-1, 223-2, 223-3) and an output IDT (224-1, 224-2, 224-3); and
the first layer (225-1) comprising the reversibly oxygen-binding compound is formed on the surface of the single piezoelectric substrate between the input IDT and the output IDT of at least a first SAW delay line device (222-1).

7. The apparatus of claim 1, wherein:
the number of piezoelectric substrates is a pair of piezoelectric substrates (301-1, 301-2); and
a first electrode (343-1) is formed on a surface and a second electrode (343-2) formed on an opposite surface of each of the pair of piezoelectric substrates to form a first bulk acoustic wave (BAW) device (341-1) and a second BAW device (341-2).

8. The apparatus of claim 1, wherein:
at least the second acoustic wave device is a surface acoustic wave (SAW) device (102-2, 222-2, 402-2) formed on the surface of the one of the number of piezoelectric substrates (101, 201, 401) in a compartment (105, 405) designed to reduce exposure to the ambient O₂; and
wherein at least the second SAW device (102-2, 222-2, 402-2) is formed in association with a second layer (104-2, 225-2) comprising the reversibly oxygen-binding compound.

9. The apparatus of claim 1, further comprising:
a third surface acoustic wave (SAW) device (102-3, 222-3, 402-3) formed on a surface of a single piezoelectric substrate (101, 201, 401) with a longitudinal axis at an angle of from around 10 degrees to around 20 degrees relative to a longitudinal axis of a second SAW device (102-2, 222-2, 402-2) formed on the surface of the single piezoelectric substrate; and
circuitry (108, 110, 111, 208, 210, 211) configured to determine an ambient temperature based upon a differential in frequencies (107-2, 107-3, 228-2, 228-3) between the second SAW device (102-2, 222-2, 402-2) and the third SAW device (102-3, 222-3, 402-3) caused by different temperature coefficients of acoustic wave velocities.

10. The apparatus of claim 9, wherein:
the second SAW device (102-2, 222-2, 402-2) and the third SAW device (102-3, 222-3, 402-3) are formed on the surface of the single piezoelectric substrate (101, 201, 401) in a compartment (105, 405) designed to reduce exposure to the ambient O₂; and
wherein the second SAW device and the third SAW device are formed in association with a second layer (104-2, 225-2) and a third layer (104-3, 225-3), respectively, comprising the reversibly oxygen-binding compound.

## Amended claims

### Amended claims in accordance with Rule 137(2) EPC.

1. An acoustic wave based sensor apparatus (100, 220, 340, 460),
comprising:
a number of piezoelectric substrates (101, 201, 301, 401);
a plurality of acoustic wave devices (102, 222, 341, 402) each formed on a surface of at least one of the number of piezoelectric substrates;
a first layer (104-1, 225-1, 345-1) comprising a reversibly oxygen-binding compound formed on the surface of one of the number of piezoelectric substrates in acoustic association with at least a first acoustic wave device (102-1, 222-1, 341-1, 402-1);
a second layer (104-2, 225-2, 345-2) comprising the reversibly oxygen-binding compound formed on the surface of one of the number of piezoelectric substrates (101, 201, 301, 401) in acoustic association with at least a second acoustic wave device (102-2, 222-2, 341-2, 402-2);
the second acoustic wave device formed on the surface of one of the number of piezoelectric substrates (101, 201, 301, 401) in a compartment (105, 405) designed as a barrier to exposure to ambient oxygen gas (O₂); and
circuitry (108, 109, 111, 208, 209, 211, 311) configured to determine a level of the ambient O₂ based upon a differential in output frequencies (107-1, 107-2, 228-1, 228-2, 347-1, 347-2) between the first acoustic wave device (102-1, 222-1, 341-1, 402-1) and the second acoustic wave device (102-2, 222-2, 341-2, 402-2) caused by binding of the ambient O₂ to the reversibly oxygen-binding compound of the first layer.

2. The apparatus of claim 1, wherein the reversibly oxygen-binding compound is IrCl(CO)[P(C₆H₅)₃]₂ substantially without bound O₂.

3. The apparatus of claim 1, wherein:
the first layer (104-1, 225-1, 345-1) comprises a compound selected to form a polymeric matrix to immobilize the reversibly oxygen-binding compound, to be permeable to the ambient O₂, and to be chemically nonreactive with the reversibly oxygen-binding compound;
the second layer (104-2, 225-2, 345-2) comprises the polymeric matrix-forming compound formed on the surface of the one of the number of piezoelectric substrates (101, 201, 301, 401).

4. The apparatus of claim 1, wherein the polymeric matrix is formed from a number of compounds selected from a group that includes:
various forms of organically modified silicas or silicates (ORMOSILs);
polystyrene;
PS-co-fluoroacrylate;
polyvinylfluoride (Teflon
AF);
poly(dimethylsiloxane);
ethyl-cellulose; and
silicon rubber; and
wherein the reversibly oxygen-binding compound is mixed in a range of from around 30% to around 60% by weight with the number of polymeric matrix compounds.

5. The apparatus of claim 1, wherein:
the number of piezoelectric substrates is a single piezoelectric substrate (101); the plurality of acoustic wave devices are each surface acoustic wave (SAW)
resonator devices (102-1, 102-2, 102-3) comprising a single interdigital transducer (IDT) 103-1, 103-2, 103-3); and
the first layer (104-1) comprising the reversibly oxygen-binding compound is formed on the surface of the single piezoelectric substrate over at least a first SAW resonator device (102-1).

6. The apparatus of claim 1, wherein:
the number of piezoelectric substrates is a single piezoelectric substrate (201); the plurality of acoustic wave devices are each surface acoustic wave (SAW)
delay line devices (222-1, 222-2, 222-3) comprising an input interdigital transducer (IDT) (223-1, 223-2, 223-3) and an output IDT (224-1, 224-2, 224-3); and
the first layer (225-1) comprising the reversibly oxygen-binding compound is formed on the surface of the single piezoelectric substrate between the input IDT and the output IDT of at least a first SAW delay line device (222-1).

7. The apparatus of claim 1, wherein:
the number of piezoelectric substrates is a pair of piezoelectric substrates (301-1, 301-2); and
a first electrode (343-1) is formed on a surface and a second electrode (343-2) formed on an opposite surface of each of the pair of piezoelectric substrates to form a first bulk acoustic wave (BAW) device (341-1) and a second BAW device (341-2).

8. The apparatus of claim 1, wherein:
at least the second acoustic wave device is a surface acoustic wave (SAW) device (102-2, 222-2, 402-2) formed on the surface of the one of the number of piezoelectric substrates (101, 201, 401) in the compartment (105, 405) designed as the barrier to exposure to the ambient O₂; and
at least the second SAW device (102-2, 222-2, 402-2) is formed in acoustic association with the second layer (104-2, 225-2) comprising the reversibly oxygen-binding compound.

9. The apparatus of claim 1, further comprising:
a third surface acoustic wave (SAW) device (102-3, 222-3, 402-3) formed on a surface of a single piezoelectric substrate (101, 201, 401) with a longitudinal axis at an angle of from around 10 degrees to around 20 degrees relative to a longitudinal axis of a second SAW device (102-2, 222-2, 402-2) formed on the surface of the single piezoelectric substrate; and
circuitry (108, 110, 111, 208, 210, 211) configured to determine an ambient temperature based upon a differential in frequencies (107-2, 107-3, 228-2, 228-3) between the second SAW device (102-2, 222-2, 402-2) and the third SAW device (102- 3, 222-3, 402-3) caused by different temperature coefficients of acoustic wave velocities.

10. The apparatus of claim 9, wherein:
the second SAW device (102-2, 222-2, 402-2) and the third SAW device (102-3, 222-3, 402-3) are formed on the surface of the single piezoelectric substrate (101, 201,
401) in the compartment (105, 405) designed as the barrier to exposure to the
ambient O₂; and
the second SAW device and the third SAW device are formed in acoustic association with the second layer (104-2, 225-2) and a third layer (104-3, 225-3), respectively, comprising the reversibly oxygen-binding compound.
